# EUROPEAN PATENT APPLICATION

(11) **EP 1 435 258 A2**
(43) Date of publication of application: **07.07.2004**
(21) Application number: 03029252.8
(22) Date of filing: 18.12.2003
(51) Int. Cl.: A63F 13/04

(54) **An apparatus and a method for more realistic shooting video games on computers or similar devices using visible or invisible light**

(30) Priority: 20.12.2002 US 326212
(71) Applicant: Wang, Xiaoling, 90765 Fürth (DE)
(72) Inventor: Wang, Xiaoling, 90765 Fürth (DE)

(57) **Abstract**

An apparatus, system, and a method for providing more realistic shooting input for shooting video games on computers or similar devices is provided. The apparatus may be comprised of a mock shooting device, such as a gun, having one or two lighting devices containing a plurality of light sources. The lighting devices may use visible or invisible lights. The apparatus may also include a screen device for displaying visual target objects of a video shooting game, at which a game player can shoot at with the mock shooting device, a video camera that captures video images of the mock shooting devices, and a computing device that computes the hit position of the mock shooting device on the screen device based on the captured video images. The determined hit position can then be fed to the video shooting game software run by the computing device which can determine if a visual target object is actually hit or not, and reacts accordingly. The mock shooting device may further be comprised of a wireless sender or a wired communication line to send command signals from the mock shooting device to the computing device. The system and method can be extended to a plurality of game players using mock shooting devices with differently colored or uniquely spatially arranged lighting devices so that a plurality of hit positions may be determined.

## Description

### Cross Reference to Rolated Applications

This present application is a continuation in part of and claims the priority of U.S. Patent Application No. 10,128,623, titled "AN APPARATUS AND A METHOD FOR MORE REALISTIC SHOOTING VIDEO GAMES ON COMPUTERS OR SIMILAR DEVICES" filed on April 23, 2002, inventor and applicant Xiaoling Wang.

### Field of the invention

This invention relates to the field of systems and methods for video games, which entail the use of mock shooting devices, such as mock guns. These video games are typically comprised of computer software which is run on computers or similar devices.

### Background of the Invention

Video games, which entail the use of mock shooting devices, are popular and entertaining. These video games are typically comprised of computer software which is run on computing devices, such as home personal computers. However, most computer video games, which entail the use of mock shooting devices typically, use computer peripherals, such as a keyboard, a mouse or a joystick to aim and shoot at visual targets on a computer or video screen. Other similar devices, such as the PLAYSTATION (trademarked) from SONY (trademarked) and the XBOX (trademarked) from MICROSOFT (trademarked), use a game pad or other game control device to aim and shoot at visual targets on a computer video screen. These types of peripheral devices make the shooting games somewhat less realistic.

There have been some attempts to make video games which entail the use of mock shooting devices, more realistic. All known prior art in the field of shooting video games, as described in the U.S. Patents 5,366,229 to Suzuki and 6,146,278 to Kobayashi, incorporated herein by reference, rely on three major components: a mock gun that can emit a light beam to a target on a screen to be shot at, a video camera that photographs the screen for detecting an intersecting point of the light beam on the screen, and a position determination device that determines the actual position of the light beam on the screen. The position of the light beam on the screen can then be fed back to shooting video game control computer software to determine if a visual target on a screen is "hit" or not. Some visual and audio feedback signals indicating hit or miss can be generated. Although these systems are more realistic than the shooting video games with keyboards or joysticks, they are not very suitable for use with the shooting video games on computers or similar devices.

The main reason is the fact that a normal video camera used to photograph a computer monitor screen may not be able to provide steady video images of the computer monitor screen due to the difference in frequencies of the monitor and the video camera. The monitor refresh frequency is typically selectable between sixty - one hundred and twenty Hz while the video camera capturing frequency is typically less than thirty Hz. The video camera capturing frequency is also processing speed and image size dependent. Fast computers may be able to capture thirty video frames per second (thirty Hz) with an image size of 640 by 480 pixels. Slow computers may only be able to capture ten frames per second (ten Hz) with the same image size and thirty frames per second for a smaller size of for example 320 by 240 pixels. Only if both frequencies are identical or the monitor refresh frequency divided by the camera capturing frequency is an integer in a more general term, steady video images of the monitor screen may be captured. Since a computer user may use any refresh frequency from a wide range of monitor refresh frequencies and most video cameras have a typical capturing frequency of between ten and thirty Hz, it is very common that video cameras do not provide steady video images from a computer monitor due the frequency mismatch.

For capturing a steady video from a computer monitor, there are only two options. The first option involves very high-end video cameras with special auto-sync functions. Although they can in general provide steady video images from most computer monitors, they are very expensive. The second option is to preset the computer monitor refresh frequency to say sixty Hz or seventy-five Hz to keep the needed synchronization with the typical video camera with say thirty Hz or twenty-five Hz, respectively. However, this is only a valid option if the same manufacturer ships the video camera and the computer monitor used by the shooting video game and computer users do not modify the refresh frequency of their computer monitor. Because video cameras, computers, monitors and video games in general are not from a single vendor or manufacturer and computer users very often do modify the refresh frequency of their monitors, this second option is very often not practical.

In addition to the frequency mismatch problem mentioned above, the camera in the prior art as described in the U.S. Patent No. 5,366,229, incorporated by reference herein, must be placed somewhere near a game player and facing the same orientation as the game player for capturing the display screen. Although this may not present a serious problem in a professionally designed game playing place, it could be very challenging to place the video camera at home in such a way that it may not easily be occluded at anytime during the game and may not easily be bumped into. This is not always practical. In order to solve the difficult camera placement problem, the camera as described in the U.S. Patent No. 6,146,278, incorporated herein by reference, are integrated with the mock shooting device so that the camera is always facing the target screen without the danger of occlusion. However, this arrangement makes the mock shooting device somewhat expensive and the integrated video camera totally single-purposed. Furthermore, the mock shooting device with the camera must be connected to the computing device directly via a cable, which may also cause inconvenience when playing.

The above mentioned drawbacks, namely, the frequency mismatch between the display screen and the low-cost video camera, the difficult placement of the video camera facing the screen, relatively high cost for a mock shooting device with an integrated camera, as well as a needed connection cable between the mock shooting device and the computing device, can seriously limit the applicability of the prior art techniques for game players who want to play realistic video shooting games with their computers at home.

### Summary of the Invention

The present invention in one embodiment comprises a computing device; a screen device; and a first mock shooting device comprised of one or more light sources which are a part of and fixed to the first mock shooting device. The computing device is typically electrically connected to the screen device. The computing device uses the light from the one or more light sources to determine whether the first mock shooting device is aimed towards a first location on the screen device. The one or more light sources may flash light when the first mock shooting device is triggered. A video camera may be used to capture video images of the one or more light sources. The video camera may be electrically connected to the computing device and may provide data about the one or more light sources to the computing device.

In at least one embodiment of the present invention the apparatus is comprised of lighting devices using invisible light, such as infrared light, which is only invisible to human eyes, but well visible to common video sensors, such as a low-cost web cam. The use of the lighting devices with invisible light can effectively eliminate possible attention distractions of a game player due to the flashing lights of the lighting devices with visible light.

In at least one embodiment of the present invention the apparatus is comprised of at least three light sources fixed to the first mock shooting device and the light sources are not located in a single line segment. Light sources may include point light sources or area light sources. A second mock shooting device comprised of one or more light sources may also be provided. Each of the light sources of the first mock shooting device may emit light of a first color and each of the light sources of the second mock shooting device may emit light of a second color, wherein the first color and the second color are different. The light sources of the first lighting device may have a first spatial arrangement and the light sources of the second lighting device may have a second spatial arrangement, wherein the first spatial arrangement and the second spatial arrangement are different. Since invisible light, such as infrared light, does not have a particular color, a typical video camera usually cannot distinguish for example colors from different near infrared wavelengths. When lighting devices use invisible light, different spatial arrangements for different mock shooting devices can be necessary for distinguishing multiple mock shooting devices.

The present invention also includes a method of using light from one or more light sources fixed to a first mock shooting device to determine whether the first mock shooting device is aimed towards a first location on a screen device. The method may include capturing an image of the light through the use of a video camera, wherein the light can be visible or invisible to humans but visible in at least in some embodiments of the present invention to the video camera.

The present invention in one or more embodiments discloses a new system that may use a low-cost video camera, such as a typical web cam, for capturing video images of a mock shooting device instead of a computer monitor or a television screen. From the captured video images, the pose including position and orientation of the mock shooting device can be determined. Please note that pose of an object is defined as to include both position and orientation of the object in space, as used commonly in the field of computer vision. We will use the terminology throughout the present invention. From the pose of the mock shooting device, the hit position on the screen or the location on the screen towards which the mock shooting device is aimed, can be computed. This system can solve the frequency mismatch problem and the difficult video camera placement problem in the prior art. It also provides a more cost effective and practical solution for game players using their computers or similar devices at home.

The present invention is designed to provide a system and a method that can make video games, which employ a mock shooting device, much more realistic on computers and/or similar devices.

A system, apparatus, and a method according to the present invention uses a mock shooting device, such as a mock gun, a mock machine gun, or a mock rocket launcher, with two lighting devices, a position lighting device and a command lighting device, each containing one or more light sources. A game player uses the mock shooting device with the position lighting device being turned on to aim at one of one or more target objects displayed on a screen by a video shooting game. A typical low-cost video camera captures video images containing images of the light emitted from the light sources from the position lighting device fixed to and/or apart of the mock shooting device. The hit position at which the mock shooting device aims (points to) can quickly be determined from the captured video images. The determined hit position is then passed to the video shooting game software running on the computing device that displays a target cursor at the hit position on a screen device. When the game player moves the mock shooting device, the determined hit position represented by the target cursor on the screen, such as a cross hair cursor, moves accordingly. This gives the game player immediate feedback about where his/her mock shooting device is pointing to and allows the player to plan how the mock shooting device should be moved to get on top of the target object of interest. When the mock shooting device is triggered, the command lighting device of the mock shooting device may flash light to signal a shooting command. The triggered hit position can then be fed to the video shooting game software that determines if a visual target is "hit" or not, and can react accordingly.

A system, apparatus, and a method according to the present invention uses a mock shooting device with an integrated control pad. The integrated control pad is comprised of a plurality of control buttons commonly available to the control pads for Xbox (trademarked) or Playstations (trademarked). The integrated control pad is used to send control commands (signals), such as different weapon selection commands or shooter's positioning, among many other commands. The commands of the control pad can be sent from the mock shooting device to the computing device in the following three ways:
(1) The control commands can be encoded and sent via a lighting device showing different lighting patterns or colors or a combination of both. The lighting patterns or colors can then be captured by the video camera. The video image containing the light patterns can then be analyzed and decoded as commands by the computing device.
(2) A wireless connection can be used to send the control signals from the mock shooting device to the computing device. The wireless connection can be radio-wave based, such as the connections of a cordless telephone between its base station and its handset or a remote garage door opener, or infrared light based, such as a common remote control for home electronics. This embodiment typically would require a receiving device to be placed and connected to the computing device.
(3) A wired connection can also be used to send the control signals from the mock shooting device to the computing device. The wired connection can be the same as the wired connections between a game console and its control pad. Although a wired connection is simpler and cheaper than a wireless connection, it does constrain the freedom of movement of a game player.

The system, apparatus, and method in accordance with embodiments of the present invention offer the following advantages:
(1) The video camera needed for the system can be a general-purpose, low cost video camera that can be used for many other applications, such as video-conferencing.
(2) A game player may be able to use his/her existing web cam for playing the shooting game.
(3) The mock shooting device according to some embodiments of the present invention does not need a cable to connect to the computing device. This lack of need for a connection cable imposes less movement constraints and provides a greater possible shooting distance range for the mock shooting device.
(4) The mock shooting device needed for the system can also be a multi-purpose low cost device. The mock shooting device, such as a mock machine gun, can be used and played just like a toy machine gun with or without the shooting game.

### Brief Description of the Drawings

Fig. 1 is a perspective view schematically illustrating the overall structure of the preferred embodiment of the present invention;
Figs. 2A and 2B illustrate point and area light sources shown in video images;
Fig. 3 is a block diagram or flow chart schematically illustrating a method which can be executed by a hit position determination device and a command determination device;
Fig. 4 is a perspective view schematically illustrating the overall structure of another embodiment of the present invention;
Fig. 5 is a perspective view schematically illustrating the overall structure of another embodiment of the present invention with a wireless connection for sending commands; and
Fig. 6 is a perspective view schematically illustrating the overall structure of another embodiment of the present invention with a wired connection for sending commands.

### Detailed Description of the Invention

The present invention in one or more embodiments provides a solution that can make shooting video games much more realistic on computers or similar devices, such as the PLAYSTATION (trademarked) from SONY (trademarked), that contain at least one processor, a memory device and/or a storage device, a monitor or a display screen, such as a television set, a low cost video camera, and some input devices, such as a game pad, and/or joysticks.

A system, apparatus, and method according to the present invention uses a mock shooting device, such as a mock gun, a mock machine gun, or a mock rocket launcher, with a position lighting device and a command lighting device. A game player uses the mock shooting device with the position lighting device being turned on to aim at one of one or more target objects displayed on a screen by a video shooting game. When the mock shooting device is triggered, the command lighting device flashes light to send a shooting command signal to the computing device. Both lighting devices include one or more light sources and are mounted on or built in the mock shooting device. The mock shooting device can be triggered continuously with a predefined time interval when its triggering device is pulled back and not released or the mock shooting device can be triggered just one time with a quick pull back and release. The mock shooting device may also provide audio or visual feedback signals indicating that the device has been triggered. For example, the mock shooting device may play a very short and typical gun shooting sound clip when it is triggered. When it is continuously triggered, the very short and typical gun shooting sound clip will be repeated with a predefined time interval as long as the trigger is pulled back and not released.

A system, apparatus, and method according to the present invention uses a commonly available low-cost video camera, such as a web cam, mounted on top of a screen device, such as a computer monitor or a TV set, to capture the video images containing the light from the lighting devices. The hit position on the screen at which the mock shooting device aims and shoots, can be determined from the captured video images containing the mock shooting device with the lighting devices. The hit position can then be fed to the shooting video game computer software which can determine if a target is actually hit or not. It should be noted that hereinafter the word "hit", used throughout this application, is meant to be a virtual hit on the screen by a virtual bullet fired by the mock shooting device, instead of an actual hit in a physical sense.

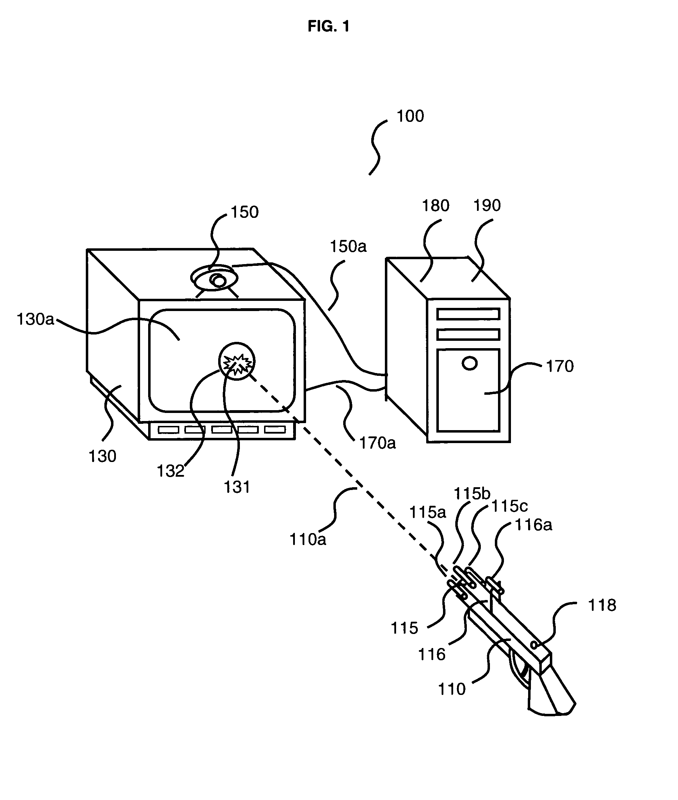

A perspective view of a system, apparatus, and method according to one preferred embodiment of the present invention is shown in Fig. 1. Fig. 1 shows an apparatus 100 comprised of a mock shooting device 110, a screen device 130, a video camera 150, and a computing device 170. The computing device 170 may be a personal computer or a game console machine, or other similar devices. The screen device 130 is electrically connected to the computing device 170 by communications line 170a. The video camera 150 is electrically connected to the computing device 170 by communications line 150a. The communications lines 150a and 170a may be comprised of wireless connections, hardwired connections, optical connections, software connections, or any other known communication connections.

The mocking shooting device 110 includes a position lighting device 115 and a command lighting device 116. The position lighting device 115 may be comprised of three lights 115a, 115b, and 115c. The screen device 130 can display target visual objects to be aimed and shot at. The video camera 150 may be used to capture video images from the mock shooting device 110 and the video camera 150 can be mounted onto the screen device 130. The computing device 170 may be comprised of a hit determination device 180, which may be comprised of computer software which is part of and is running on the computing device 170. The hit determination device 180 may determine the hit position, such as hit position 131, on the screen device 130 at which the mock shooting device 110 was aiming and shooting.

The shooting path (trajectory) 110a is the virtual shooting path of a virtual bullet from the mock shooting device 110 to the screen device 130. The light from lights 115a, 115b, 115c, and 116a or some other light is usually non-directional so that they can be observed from a large range of directions. For this reason, each of lights 115a-c and 116a may be a typical small light bulb or a small LED. The lights 115a-c and 116a do not need to be expensive directional lights, such as lasers. The screen device 130 includes a screen 130a on which visual target objects, such as target object 132, are displayed. The computing device 170 is also responsible for running the shooting game 190, which may be comprised of computer software, that displays visual target objects to be shot at on the screen 130a and reacts accordingly depending on whether a visual target object has been hit or not. With some exceptions, the video shooting game 190 may be similar to those prior art video shooting games which are typically comprised of computer software and which run on computers. One of the differences of the present invention is how user shooting information is input into the computing device 170. The system and method according to the present invention uses a realistic mock shooting device 110 and a video camera 150 for inputting user shooting information while conventional prior art games use a keyboard, mouse, game pad or joysticks.

In operation, referring to Fig. 1, a game player starts a video shooting game 190 stored in the computing device 170. The video shooting game 190 may be initially supplied to the computing device 170 via compact disc, floppy disc, downloaded from the Internet, or in any other known manner. The shooting game 190 displays scenes with one or more visual target objects, such as circular target object 132, on the screen 130a via communications line 170a. Typical examples of the communications line 170a are common video display cable and the Universal Serial Bus (USB) cable version 1.1 and 2.0 for computer monitors, and composite video, S-video, or RGB (red, green, blue) video cables for television sets. The game player uses the mock shooting device 110 to aim and shoot at the displayed target objects provided by the video shooting game 190 on the screen 130a. After the game player starts the game, the light sources 115a-c of the position lighting device 115 will be tuned on using the switch 118. The light sources 115a-c are each rigidly mounted on or integrated within the mock shooting device 110. The video camera 150 placed on top of the screen device 130 captures video images from the light sources 115a-c of the position lighting device 115 and sends the video images through communications line 150a to the computing device 170. Typical and common examples of the communications line 150a are the Universal Serial Bus (USB) cable version 1.1 and 2.0, or cables made according to the IEEE 1394 standard, such as the FIREWIRE (Trademarked) and the ILINK (Trademarked copyrighted). The hit position determination device 180 running on the computing device 170 then processes the captured video images. The hit position determination device 180 computes the position and the orientation of the lighting device 115 based on the positions of the plurality of light sources 115a-c of the lighting device 115 in the video images. The position and the orientation of the mock shooting device 110 can then be determined since the lighting device 115 has a known and fixed spatial relationship with respect to the mock shooting device 110. (This assumption is always valid since we require that the position lighting device 115 is either an integral part of or rigidly mounted on the mock shooting device 110). Based on the computed position and the orientation of the mock shooting device 110 relative to the screen 130a, the hit position of the virtual bullet from the mock shooting device 110 on the screen 130a can finally be calculated. The hit position is then passed to the video shooting game 190 running on computing device 170. By using the hit position information, a target cursor is displayed on the screen 130a so that the game player can see where exactly is his/her shooting device pointing to and determine how it should be moved to hit a target object of interest. When the target cursor is right on top of the target object, the game player can trigger the mock shooting device 110 to shoot at the target. When the mock shooting device 110 is triggered, the light source 116a of the command lighting device 116 flashes light to signal a shooting command. The shooting command is captured by the camera 150, and the camera 150 feeds the captured image to the computing device 170, and then the computing device 170 determines the command signal from the image containing the light sources from the command lighting device and sends it further to the video shooting game 190. The video shooting game 190 running on the computing device 170, determines whether an actual visual target object, such a target object 132, has been hit or not by the virtual bullet from mock shooting device 110 and if so the shooting game 190 executes the appropriate computer software instructions for a "hit" scenario.

The position and the orientation of the mock shooting device 110 in space can be determined indirectly via a pose estimation of the rigidly mounted or integrated position lighting device 115. This indirect method reduces the computational complexity and improves the robustness of the method significantly. The advantages can be summarized as follows:
(1) No difficult object and background separation problem. The pose estimation of a general three-dimensional object, such as the mock shooting device 110, is not always simple, when the object is not easily separable from the background or the environment in which the object exists. The object and background separation problem in general is regarded as a difficult computer vision problem that is not always easily solvable. However, if the light sources 115a-c of the position lighting device 115 have been turned on, the light sources will be imaged as bright blobs in video images. When the mock shooting device 110 is triggered, the light source 116a of the command lighting device 116 that flashes light will also be imaged as an additional bright blob in video images captured by the video camera 150. Bright blobs are in general very easily detectable and hence quickly separable from a background without additional bright light sources. This assumed condition is usually not difficult to be satisfied.
(2) Low localization complexity of feature points. For object pose estimation, object feature points, such as edge, junction and corner points, must be localized. In general, these image feature points take longer to compute than the detection of simple bright blobs generated by point or area light sources.
(3) Furthermore, bright blobs can be detected much more reliably than common image feature points. This is especially true if the image contrast is low and the noise level is high, when the image is taken under a typical low illumination condition.

As discussed above, the position lighting device 115 plays a significant role for solving the pose estimation of the mock shooting device 110. There is a question of how many points do we need to estimate the pose of the mock shooting device 110 via the position lighting device 115. As stated in the reference by M.L. Liu et. al., which is incorporated by reference herein, three non-collinear corresponding points (i.e. three image points that are not arranged along a single line in space) are sufficient for the pose estimation of an object. However, in order to make the pose estimation more reliable, four or more points may be helpful. For example, a method with four points is proposed in the reference by M.L. Liu et. al.. The proposed method works with four non-collinear (i.e. all points are not arranged along a single line in space) points that can either be co-planar (i.e. all points are arranged along a single plane in space) or non-coplanar (i.e. all points are not arranged along a single plane in space). The proposed method may also be extended to handle more points. Because the pose estimation problem with image points is a well-known and solved problem, details will not be described in this invention and can be found in the cited reference. It is important to point out that the cited reference only serves the purpose of a common reference. It does not indicate in any way that the method is the preferred one, but only that it can be used with the system and the method according to one or more embodiments of the present invention. Therefore, we can conclude that a minimum of three non-collinear point light sources, such as 115a, 115b, and 115c shown in Fig. 1, should be used for the position lighting device 115 for pose estimation with reasonable accuracy. For better accuracy, four or more non-collinear point light sources may be used. If high accuracy is not required, less than three points may also be used for providing a rough estimation of the hit position.

While the position lighting device 115 is designed for the pose estimation, the command lighting device 116 is for sending command signals. The command lighting device 116 as shown in Fig. 1 contains only one light source 116a because only one command signal, the shooting command in this case, needs to be sent. When more command signals are needed, more light sources may be needed for the command lighting device. The use of more than one light source for a command lighting device, similar to device 116 will be discussed later.

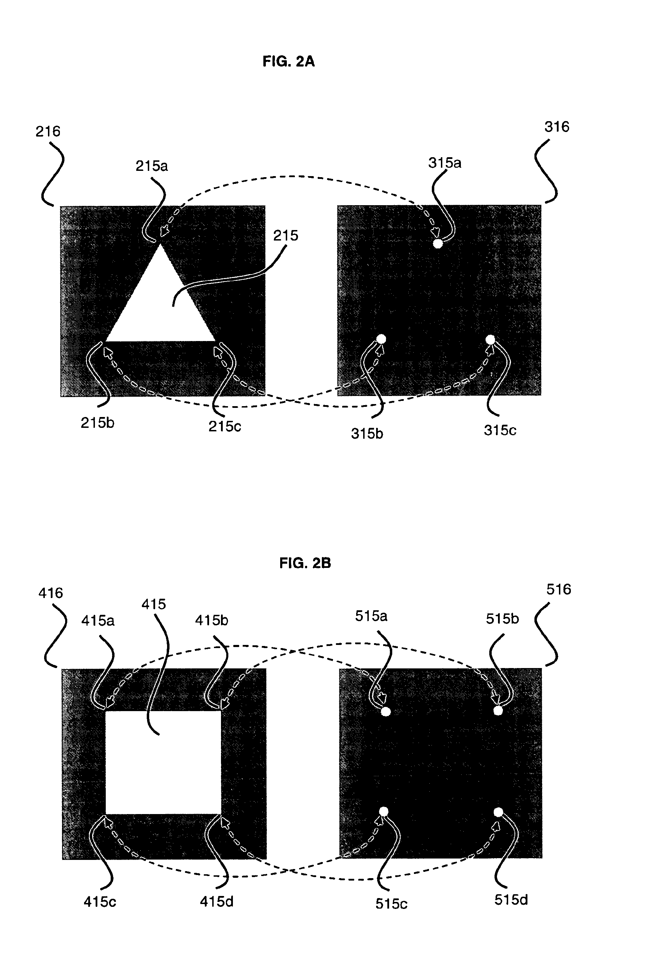

There are two common types of light sources, which may be used for solving our pose estimation. A point light source is a light source with a very small and isolated, most likely rounded lighting area that represents only a few bright pixels or a very small bright spot in a video image. Typical examples of point light sources in a video image are shown and marked as point light sources 315a-315c in video image 316 in Fig. 2A. The position of a point light source in a video image can easily be localized through determining the position of the centroid of a small and isolated bright blob. For a point light source, the shape of a point light source, such as point light source 315a, is normally not used or evaluated for pose estimation due to its compact size. As mentioned previously, we typically need at least three point light sources for estimating the pose of the mock shooting device 110. In contrast, for an area light source, such as a light source in the shape of a triangle or a rectangle, such as triangular light source 215 in video image 216 in Fig. 2A and rectangular light source 415 in video image 416 shown in Fig. 2B, respectively, the light source's shape may be used for computing the position and the orientation of the light source. In general, one area light source with, say three or four, corners, can be seen as equivalent to three or four point light sources, respectively. As shown in Fig.2A, for example, the three corner points, 215a-c, of a triangular-shaped area light source 215 can easily be extracted and these three extracted corner points can be viewed as similar to the three point light sources 315a-c, arranged in a triangular shape. Similarly, a rectangular area light source 415, shown in Fig. 2B, has four corner points, 415a-d, that can be seen as or equivalent to four co-planar point light sources 515a-d.

Therefore, one triangular area light source may be sufficient to satisfy the minimum condition of three point light sources for the pose estimation, as mentioned previously. Depending on the design of the mock shooting device 110, the lighting device 115 may be comprised of point light sources, area light sources, or a combination of both. In general, more light sources lead to more accurate and robust pose estimation. However, on the other hand, more light sources mean longer computational time and higher production cost.

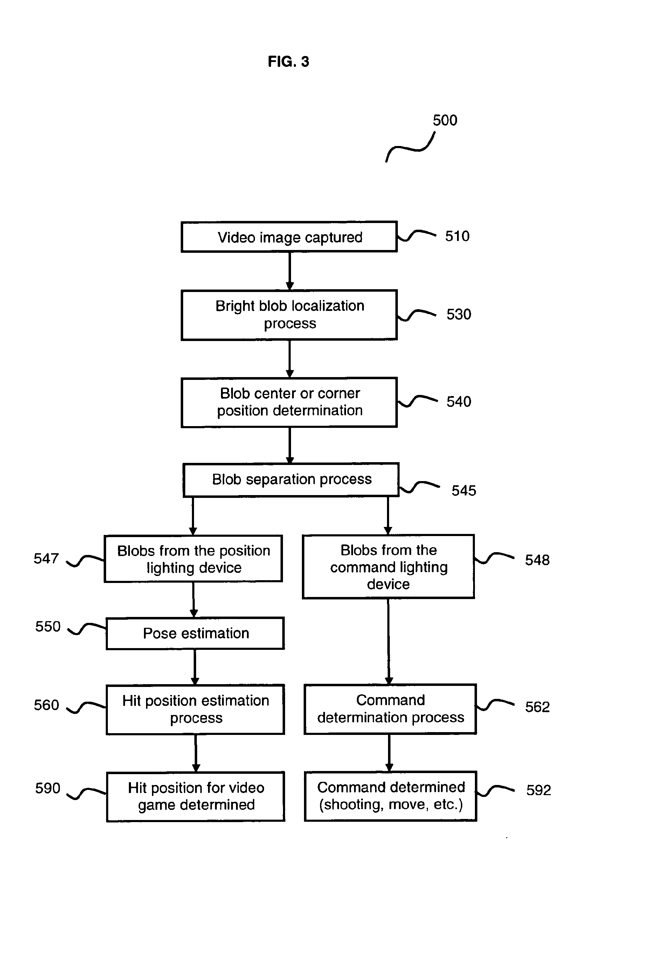

Fig. 3 shows a flow chart 500 illustrating a method which can be executed by a hit position determination device running on computing device 170, such as device 180 shown in Fig. 1, for determining the hit position of a virtual bullet shot from the mock shooting device 110. At step 510 a video image is captured. The video image may be captured by video camera 150, which then transmits data via the communications line 150a to the computing device 170. The captured video image may be subjected to a bright blob localization process by hit position determination device 180 at step 530. The computing device 170, which runs the hit determination device 180 computer software, may scan through the whole captured video image pixel by pixel and may compare a pixel intensity value with a given or computed threshold value which may be stored in memory of the computing device 170. Pixels with intensity value greater than the threshold value may be identified as "bright" pixels by the computing device 170. If the computing device 170 cannot find any bright pixels in the image, the computing device 170 determines that no lighting device of the mock shooting device 110 was turned on when the captured video image was captured and no further processing is needed. Otherwise, the computing device 170 determines if the detected bright pixels form bright blobs with bright neighboring pixels. This step 530 essentially removes noisy pixels and localizes the bright blobs. The identified bright blobs are then compared with a given expected size range of the bright blobs as well as the given expected total number of bright blobs for verifying the correctness of the blob localization. For example, if a system uses three point light sources in its position lighting device and one point light source in its command lighting device, and the blob size of each imaged point light source is between five and ten pixels in diameter, the computing device 170 will check if the total number of bright blobs is four or three (corresponding to with or without the command lighting device being turned on) and if the diameter of each bright blob is indeed between five and ten pixels. Only if both checks are successful, the computing device 170 can be certain that the localized bright blobs are indeed coming from the four or three expected point light sources. Otherwise, the computing device 170 may decide to go back to look for more bright blobs in the image with a lowered threshold value or post an error message. The localized bright blobs are then subjected to a position determination process at step 540 by the computing device 170 for blob center and blob corners.

If only point light sources are used in the lighting device, the computing device 170 at step 540 will perform position determination for each blob center. The center position of a blob can easily be computed by averaging the pixel coordinates of each pixel within the blob. If one or more area light sources are used, the computing device 170 at step 540 will perform corner detection for every given bright blob. For example, if one rectangular-shaped area light source is used in the lighting device, the computing device 170 will localize four expected corners. Since corner detection methods are very common and basic in the computer vision field and described in almost all textbooks about computer vision and image processing, we skip the details for simplicity and clarity of the description. When a mixture of point and area light sources are used, both blob center and corner detections are needed.

The localized center and/or corner points are then passed to a blob separation process at step 545. At step 545, the computing device 170 separates the blobs corresponding to the position lighting device 115 and the command lighting device 116 by comparing of the blob positions with the known geometry of both lighting devices.

After the blob separation, the blobs corresponding to the position lighting device 115, have been separated out at step 547, and will be fed to a pose estimation process at step 550. At step 550, the computing device 170 takes center and/or corner points as input, and estimates the position and the orientation of the lighting device 115. This method works with either point or area light sources. The type of light sources makes only differences in step 540 as discussed in the previous section: locate blob center points for point light sources and locate blob corner points for area light sources. A good working method for pose estimation with four feature points is well described in the reference by M.L. Liu et al., which is incorporated by reference herein. Since there are many published pose estimation methods that could be used with the present invention without modification, and the description of the pose estimation process itself is complicated, the present application again skips the details. After the pose (position and orientation) of the mock shooting device 110 is determined by the computing device 170 at step 550, the shooting path 110a of the virtual bullet from the mock shooting device 110 as shown in Fig. 1 can easily be obtained.

Once the shooting path 110a of the virtual bullet from the mock shooting device 110 is computed by the pose estimation process at step 550, the hit position of a virtual bullet from the mock shooting device 110 can then be computed by the computing device 170 by a hit position estimation process at step 560 shown in Fig. 3. The hit position estimation process at step 560 treats the display screen 130a as a plane with its known position and orientation and the shooting path 110a or line of the mock shooting device 110 as a line in space with its known position and orientation, and computes the intersection point of the plane (i.e. display screen 130a) and the line (i.e. shooting path or line 110a). The intersection point is the hit position, such as position 131, of the virtual bullet on the display screen 130a. The hit position estimation process at step 560, executed by computing device 170, finally outputs the screen hit position at step 590 to the shooting game 190 which is computer software running on the computing device 170.

In parallel to the pose estimation for the blobs from the position lighting device 115, the blobs from the command lighting device 116, determined at step 548, are fed to the command determination process at step 562. When only one point light source is used in the command lighting device 116 as in the current example, the computing device 170 at step 562 simply determines if there is a bright blob from the command lighting device 116 in the image. If this one bright blob has been found, this process simply outputs the determined shooting command, such as "fired" at step 592.

Finally, the video shooting game 190 uses the outputs supplied at steps 590 and 592 as input to determine if an actual visual target object displayed on the display screen 130a has been hit or not and the video shooting game 190 reacts depending on how it is programmed.

The apparatus 100 shown in Fig. 1 may be extended to include a plurality of mock shooting devices, each of which may be identical to the mock shooting device 110 equipped with lighting devices 115 and 116 using different colors for multiple game players. If the video camera 150 is a color camera, light sources in different colors can easily be distinguished. For example, for a dual user apparatus, two mock shooting devices, each like 110, one mock shooting device having only red light sources, such as one or more red light sources of a red lighting device and one mock shooting device having only green light sources such as one or more green light sources of a green lighting device, may be operated by two game players. The pose of the two mock shooting devices may be determined separately by locating the red pixels for one of the mock shooting devices and the green pixels for the other in the same video images as long as the red pixels and the green pixels are not overlapping in space. When an overlap of one or more of the lighting sources of the lighting devices occurs, some red or green light sources may be occluded and hence no longer detectable. This may lead to inaccurate pose estimation and in the worst case to wrong pose estimation results. Therefore, if more than one player are playing, it is important to keep a certain minimum distance between all mock shooting devices for accurate pose estimation of the mock shooting devices.

When invisible light is used by the lighting devices, no color separation is possible. In this case, each of the mock shooting devices should have its own characteristics for easy differentiation. For example, a mock shooting device may use point light sources arranged in a triangular shape, while others may contain point light sources arranged in a rectangular shape or in a more general polygonal shape. Furthermore, if one mock shooting device contains only point light sources, the others may be comprised of area light sources or a combination of point and area light sources. In general, the characteristics of each lighting device, such as its shape and spatial distribution, should be as different as possible for easy separation.

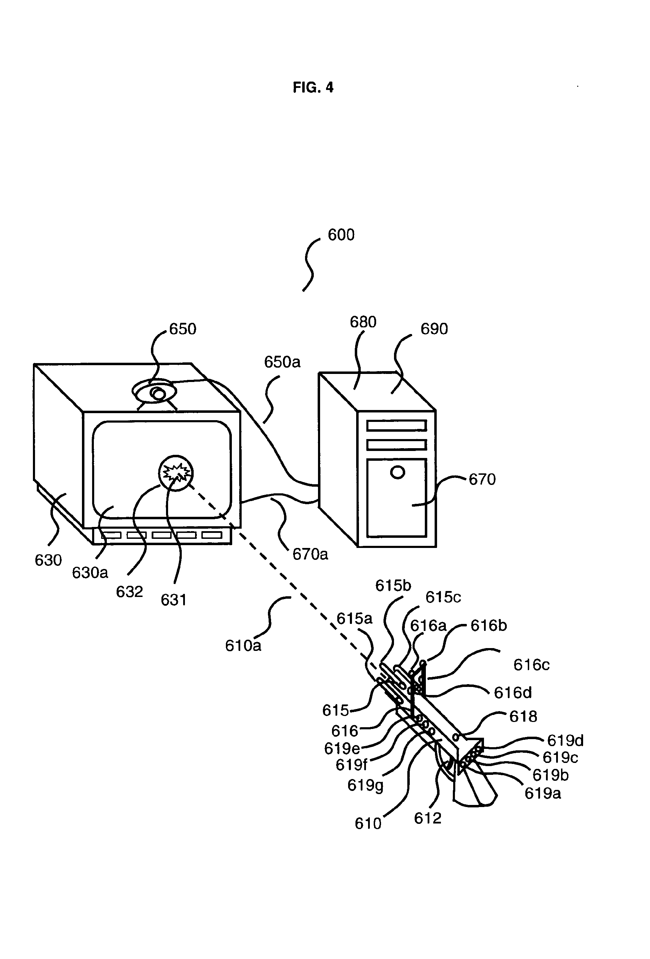

There are two main types of video shooting games available on the market today. The first type displays only targets on a screen to be shot at. The main task for a game player playing with this type of shooting game is to shoot and destroy the displayed targets. The present invention in various embodiments can serve this type of video shooting game very well by making them more exciting and realistic. The second type of video shooting games displays not only targets to be destroyed but also a shooter on a screen who can actively seek and destroy the targets. Furthermore, a game player may also change his/her weapon dynamically depending on needs. The game player may for example select to use a simple handgun in some cases, a machine gun when more enemies are present, a rifle with a telescope to play like a sniper, or even an anti-tank missile launcher for destroying enemy tanks. For this type of more advanced video shooting games, it is certainly desirable if a mock shooting device can not only reveal its pose and send a simple shooting command, but also send more advanced commands mentioned previously. Fortunately, only small modifications of the mock shooting device 110 are needed to make this possible, as shown in Fig. 4. Fig. 4 shows apparatus 600 comprised of a mock shooting device 610, a screen device 630, a video camera 650, and a computing device 670. The computing device 670 may be a personal computer or a similar device. The screen device 630 is electrically connected to the computing device 670 by a communications line 670a. The video camera 650 is electrically connected to the computing device 670 by communications line 650a. The communications lines 650a and 670a may be comprised of wireless connections, hardwired connections, optical connections, software connections, or any other known communication connections. Devices 610, 630, 650, and 670 of apparatus 600 shown in Fig. 4 are similar to the devices 110, 130, 150 and 170 of apparatus 100 shown in Fig. 1. In comparison with the apparatus 100 shown in Fig. 1, the apparatus 600 has mainly two differences between the mocking shooting device 610 and the mock shooting device 110. The position lighting device 615 is similar to the position lighting device 115 shown in Fig. 1. However, unlike the command lighting device 116, the command lighting device 616 is comprised of a plurality of light sources instead of one, such as light sources 616a-d. The command lighting device 616 may be rigidly mounted to the device 610. While the position lighting device 615 is activated by a separate switch 618 of the mock shooting device 610, similar to mock shooting device 110, the command lighting device 616 is controlled by the trigger 612 and a plurality of control buttons of an integrated control pad, such as buttons 619a-g. The control buttons 619a-g may be placed anywhere on the mock shooting device 610 as long as the buttons 619a-g can easily be reached and operated by the thumbs or fingers of a game player. The placement of the control buttons 619a-g shown in Fig. 4 serves only as one example for the simple illustration purpose. More ergonomic designs may be employed to make the control buttons more accessible and more efficient. When the position lighting device 615 is turned "ON" by the switch 618, the light sources 615a-c can easily be imaged as bright blobs by the video camera 650. The computing device 670 performs pose estimation processing steps similar to computing device 170, to determining the pose of the position lighting device 615. Since the position lighting device 615 is typically rigidly mounted on or an integrated part of the mock shooting device 610, the pose of the mock shooting device 610 can be determined. Independently, the trigger 612 of the mock shooting device 610 controls the command lighting device 616. When the trigger 612 is pulled back, the command lighting device 616, including light sources 616a-d, flashes one or more lights to send the shooting command signal, independent of the state of the position lighting device 615. When each of the control pad buttons 619a-g is operated by a game player, the command lighting device 616 will flash a different and a unique combination of lights of the light sources 616a-d. Since four lights in the current example can theoretically create sixteen unique combinations (four lights, each with two states "ON" and "OFF", are equivalent to an encode with four bits that can encode sixteen combinations), up to sixteen command signals can be sent. The shooting command can be one of the command signals to be encoded. The trigger 612 can be seen as a special control button that is always associated with the shooting command. Other control buttons are more flexible and can be associated with any commands or command signals of interest. In general, the more command signals that need to be sent, the more lights that are needed for the command lighting device 616. For great robustness of the command signal detection with for example error correction capabilities, more lights may be used for sending command signals with a certain degree of redundancy.

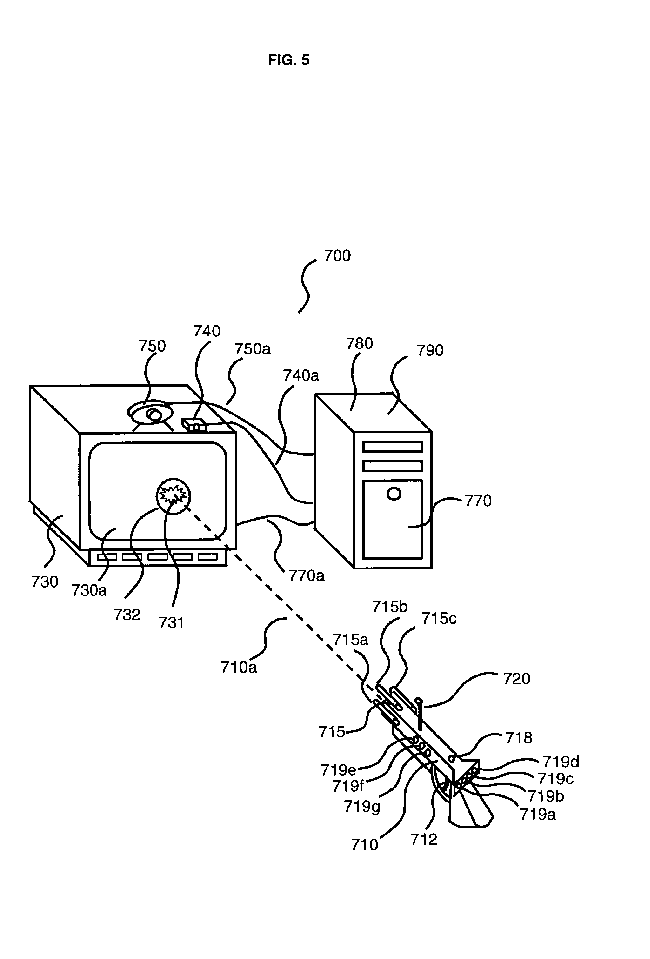

A perspective view of a system, apparatus, and method according to another embodiment of the present invention is shown in Fig. 5. Fig. 5 shows an apparatus 700 comprised of a mock shooting device 710, a screen device 730, a video camera 750, and a computing device 770. The computing device 770 may be a personal computer or a similar device. The screen device 730 is electrically connected to the computing device 770 by communications line 770a. The video camera 750 is electrically connected to the computing device 770 by communications line 750a. The communications lines 750a and 770a may be comprised of wireless connections, hardwired connections, optical connections, software connections, or any other known communication connections. Devices 710, 730, 750, and 770 of the apparatus 700 shown in Fig. 5 are similar to the devices 610, 630, 650 and 670 of the apparatus 600 shown in Fig. 4. In comparison with the apparatus 600 shown in Fig. 4, the apparatus 700 has the following two differences:
(1) The command lighting device 616 shown in Fig. 4 has been replaced with a wireless sender 720 as shown in Fig. 5. All control command signals are now encoded in the embodiment of Fig. 5, and sent via the wireless sender 720 instead of the command lighting device 616 in Fig. 4.
(2) A wireless receiver 740 is now added to the apparatus for receiving the control command signals sent by the wireless sender 720. The wireless receiver 740 communicates with the computing device 770 via the communications line 740a. The communications line 740a can be eliminated when the wireless receiver 740 is a built-in component of the computing device 770.

The wireless connection with the sender 720 and the receiver 740 can be radio wave based or infrared light based. Cordless phones and remote garage door openers are good examples of simple and low-cost wireless systems based on radio waves. Common remote controls used to control home electronics, such as TVs and VCRs, are mostly based on infrared light. In general, radio wave and infrared light are proven and low cost technologies. Both can be used in the embodiments according to the present invention.

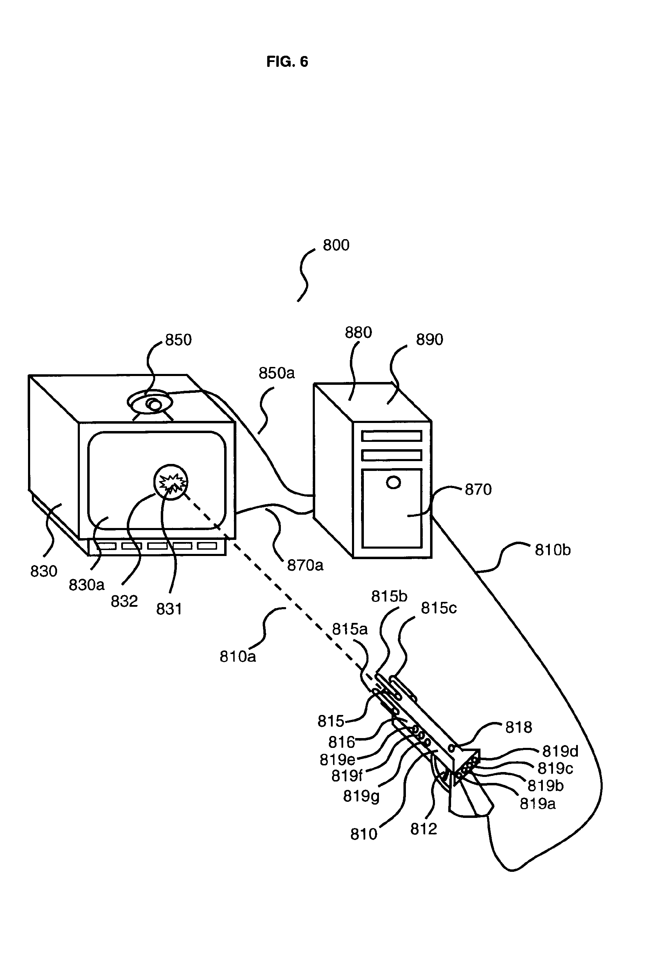

The apparatus 700 may further be simplified by integrating the wireless receiver 740 into the video camera device 750. By doing so, the apparatus 700 has one less component and one less connection line 740a with the computing device 770. This can make the whole system cheaper and compacter with less messy cables. The main disadvantage of this integrated solution is the fact that ordinary web cams can no longer be used with such a system.
A perspective view of a system, apparatus, and method according to another embodiment of the present invention is shown in Fig. 6. Fig. 6 shows apparatus 800 comprised of a mock shooting device 810, a screen device 830, a video camera 850, and a computing device 870. The computing device 870 may be a personal computer or a similar device. The screen device 830 is electrically connected to the computing device 870 by communications line 870a. The video camera 850 is electrically connected to the computing device 870 by communications line 850a. The communications lines 850a and 870a may be comprised of wireless connections, hardwired connections, optical connections, software connections, or any other known communication connections. Devices 810, 830, 850, and 870 of apparatus 800 shown in Fig. 6 are similar to the devices 710, 730, 750 and 770 of apparatus 700 shown in Fig. 5. In comparison with the apparatus 700 shown in Fig. 5, the apparatus 800 has the following main differences: The wireless connection including the sender 720 and the receiver 740 are now replaced by a wired communications line 81 0b. All control command signals are now sent in the embodiment of Fig. 6, and received via the communications line 810b. The main advantage of this approach is its low cost and simple implementation. The main drawback is the constraint of movement freedom of a game player caused by such a wired cable between the mock shooting device 810 and the computing device 870.
The apparatus 700 shown in Fig. 5 and the apparatus 800 shown in Fig. 8 may also be extended to include a plurality of mock shooting devices, each of which may be identical to the mock shooting device 110 equipped with lighting devices 115 and each of which uses a different characteristic, such as a different color or a different spatial arrangement, or a combination of them, for multiple players. In addition, each of the plurality of mock shooting devices may also have a unique identifier. The unique identifier may be just a unique identification number or other unique properties. Each of the plurality of mock shooting devices may use its unique identifier to send command signals so that the computing device can easily distinguish command signals from each of the plurality of mock shooting devices. Although the invention has been described by reference to particular illustrative embodiments thereof, many changes and modifications of the invention may become apparent to those skilled in the art without departing from the spirit and scope of the invention. It is therefore intended to include within this patent all such changes and modifications as may reasonably and properly be included within the scope of the present invention's contribution to the art.

## Claims

1. An apparatus comprising
a computing device;
a screen device;
a first mock shooting device having a position lighting device comprised of one or more light sources which are fixed to the mock shooting device; and
wherein the computing device is electrically connected to the screen device; and
wherein the computing device uses the light from the one or more light sources of the position lighting device to determine whether the first mock shooting device is aimed towards a first location on the screen device; and
wherein the first mock shooting device is further comprised of a command lighting device which is comprised of one or more light sources; and
wherein the one or more light sources flash light when the first mock shooting device is triggered.

2. The apparatus of claim 1 further comprising
a video camera that captures video images of the one or more light sources;
wherein the video camera is electrically connected to the computing device and provides data about the one or more light sources to the computing device.

3. The apparatus of claim 1 wherein
the light from the one or more light sources of the position lighting device is invisible to human eyes but visible to the video camera.

4. The apparatus of claim 1 further comprising
a second mock shooting device comprised of a position lighting devices;
wherein the position lighting device of the second marking device is comprised of one or more light sources;
wherein each of the one or more light sources of the position lighting device of the first mock shooting device has a first characteristic;
wherein each of the one or more light sources of the position lighting device of the second marking device has a second characteristic; and
wherein the first characteristic and the second characteristic are different.

5. A method comprising the steps of
using light from one or more light sources of a position lighting device fixed to a first mock shooting device to determine whether the first mock shooting device is aimed towards a first location on a screen device.

6. The method of claim 5 further comprising
capturing an image of the light through the use of a video camera.

7. The method of claim 5 wherein
the light from at least two light sources of the position lighting device is used to determine whether the first mock shooting device is aimed towards the first location on the screen device.

8. The method of claim 5 further comprising
using light from one or more light sources of a position lighting device fixed to a second mock shooting device to determine whether the second mock shooting device is aimed towards a second location on a screen device; and
wherein the one or more light sources of the position lighting device fixed to the first mock shooting device emit light with a first characteristic and the one or more light sources of the position lighting device fixed to the second mock shooting device emit light with a second characteristic and wherein the first characteristic and the second characteristic are different.

9. An apparatus comprising
a computing device;
a screen device;
a mock shooting device is comprised of a lighting device containing one or more light sources which are fixed to the mock shooting device; and
wherein one or more light sources of the lighting device emit invisible light;
and wherein the computing device uses the light from the one or more light sources of the lighting device to determine whether the mock shooting device is aimed towards a location on the screen device.

10. The apparatus of claim 9 further comprising
a video camera that captures video images of the one or more light sources of the lighting device; and
wherein one or more light sources of the lighting device emit light which is invisible to human eyes but visible to the video camera; and
wherein the video camera is electrically connected to a computing device and the video camera provides data about the one or more light sources of the lighting device to the computing device.

11. An apparatus comprising
a computing device;
a screen device;
a mock shooting device which can send a signal via a communications line;
and a lighting device containing one or more light sources which are fixed to or as a built-in part of the mock shooting device; and
wherein one or more light sources of the lighting device emit light; and
wherein the computing device uses the light from the one or more light sources of the lighting device to determine whether the mock shooting device is aimed towards a location on the screen device;
and wherein the communications line is used to send one or more command signals from the mock shooting device to the computing device.

12. The apparatus of claim 11 further comprising
a video camera that captures video images of the one or more light sources of the lighting device; and
wherein the video camera is electrically connected to a computing device and the video camera provides data about the one or more light sources of the lighting device to the computing device.
